# EUROPEAN PATENT APPLICATION

(11) **EP 4 354 328 A1**
(43) Date of publication of application: **17.04.2024**
(21) Application number: 22201657.8
(22) Date of filing: 14.10.2022
(51) Int. Cl.: G06F 21/55, G06F 21/57, H04L 9/40

(54) **METHOD AND SYSTEM FOR DETECTING DATA INCONSISTENCY**

(71) Applicant: ABB SCHWEIZ AG, 5400 Baden (CH)
(72) Inventor: GAERTLER, Marco, 69221 Dossenheim (DE); SCHMIDT, Benedikt, 69117 Heidelberg (DE); MACZEY, Sylvia, 69493 Hirschberg (DE); COPPIK, Nicolas, 64293 Darmstadt (DE)
(74) Representative: Maiwald GmbH

(57) **Abstract**

A method for detecting data inconsistency, the method comprising connecting (S1) a consistency enforcer module (10) with an operation technology, OT, domain knowledge sources and deriving candidates for modelling rules which model the consistency in collected data resulting in aggregated OT domain knowledge and assessed information; combining (S2), by using a reporting module (20), the aggregated OT domain knowledge and assessed information from a security information and event management, SIEM, system to build report data; applying (S3), by using a recommender module (30), the report data to events of the SIEM system and correlating thereon based results with the OT domain knowledge; and feeding (S4) the results to the consistency enforcer module (10) to prepare corresponding consistency rules.

## Description

### TECHNICAL FIELD

The present disclosure relates to consistency by domain knowledge and topology.

### TECHNICAL BACKGROUND

Security Information and Event Management (SIEM) is a wide-spread technology used in security for Information Technology (IT) and more and more for Operation Technology (OT). It enables threat detection and proper addressing via incident management. In the implementation, a set of rules are applied to collected events to determine the criticality of associated point in time. These rules are often inferred from best practices and observations of real and simulated attacks.

One branch of attacks on OT systems has a particular sneaky approach. The goal is to slightly alternate the operations in order to compromise the production. An example is Stuxnet, which altered rotation speeds to damage the equipment. Other potential compromises are reduction in quality and/or output or disabling of safety mechanisms to cause harm to workers and/or environment. These attacks try to hide their changes in normal noises and variations or even alter produce measurements. Especially, this second case is highly problematic as the monitored event appears to be normal. SIEM rules for such cases currently rely on observed patterns from real attacks, which naturally can only capture known attacks.

While OT systems have built-in or attached anomaly detection (AD) systems in order to capture unusual activities, they usually are not linked to security-related tasks or systems and are often build for particular problematic situations in operations. Further, the AD output is often given in context of the domain of operation and not agnostic. General purpose AD systems with automatic adaptation to different operation modes are still very rare.

### SUMMARY OF THE INVENTION

In one aspect of the present invention a method for detecting data inconsistency is provided, the method comprising connecting a consistency enforcer module with an operation technology, OT, domain knowledge sources and deriving candidates for modelling rules which model the consistency in collected data resulting in aggregated OT domain knowledge and assessed information; combining, by using a reporting module, the aggregated OT domain knowledge and assessed information from a security information and event management, SIEM, system to build report data; applying, by using a recommender module, the report data to events of the SIEM system and correlating thereon based results with the OT domain knowledge; and feeding the results to the consistency enforcer module to prepare corresponding consistency rules.

The present invention is for example implemented in Security Information and Event Management (SIEM) as a wide-spread technology used in security for Information Technology (IT) and more and more for Operation Technology (OT). At the core, a SIEM system apply rules to assess the criticality of the system. In contrast to most IT systems, OT systems have well-documented structures and often provide observations from various vantage points.

The invention extends the SIEM setups by including derived knowledge and automatically generated rules to provide inside into the consistency of the observed state. By doing so, the present invention can guide the attention of users to interesting events and support in the long-term identification of noise levels and repetitive anomalies.

Security Information and Event Management (SIEM) is a wide-spread technology used in security for Information Technology (IT) and more and more for Operation Technology (OT).

It enables threat detection and proper addressing via incident management. In the implementation, a set of rules are applied to collected events to determine the criticality of associated point in time. These rules are often inferred from best practices and observations of real and simulated attacks.

One branch of attacks on OT systems has a particular sneaky approach. The goal is to slightly alternate the operations in order to compromise the production. An example is Stuxnet, which altered rotation speeds to damage the equipment. Other potential compromises are reduction in quality and/or output or disabling of safety mechanisms to cause harm to workers and/or environment.

These attacks try to hide their changes in normal noises and variations or even alter produced measurements. Especially, this second case is highly problematic as the monitored event appears to be normal. SIEM rules for such cases currently rely on observed patterns from real attacks, which naturally can only capture known attacks.

While OT systems have built-in or attached anomaly detection (AD) systems in order to capture unusual activities, they usually are not linked to security-related tasks or systems and are often build for particular problematic situations in operations. Further, the AD output is often given in context of the domain of operation and not agnostic. General purpose AD systems with automatic adaptation to different operation modes are still very rare.

In an embodiment of the present invention, the deriving of the candidates for modelling rules is based on derivations of the collected data in terms of inconsistency of data of process variables or measurements, preferably for example in-flow, out-flow, or a capacity of a tank.

In an embodiment of the present invention, the deriving of the candidates for modelling rules is based on derivations of the collected data in terms of inconsistency of data of process variables or measurements, for example a filling level of a tank, or a relation of valve position and flow.

In an embodiment of the present invention, the deriving of the candidates for modelling rules is based on derivations of the collected data in terms of inconsistency of data of in-flow, out-flow, or a capacity of a tank. Basically all process variables or measurements could be used. The example of in-flow, capacity and out-flow are provided as embodiments and examples. In general, the constraints on consistency, can also include "static" knowledge, such as spec details of equipment. An example is that the power consumption of a motor cannot exceed that provided in its specification.

In an embodiment of the present invention, the deriving of the candidates for modelling rules is based on derivations of the collected data in terms of a filling level of a tank, or a relation of valve position and flow. Basically all process variables or measurements could be used.

In an embodiment of the present invention, the report data comprises a long-term memory of patterns.

In an embodiment of the present invention, the report data comprises reports about observed patterns.

In an embodiment of the present invention, the report data comprises noise levels, suggests characteristics of normality / abnormality and indicates temporal and spacious regions of interest that should be further investigated.

In an embodiment of the present invention, the report data comprises characteristics of normality or abnormality.

In an embodiment of the present invention, the report data is used to indicate temporal and spacious regions of interest for further investigation.

Any disclosure and embodiments described herein relate to the method and the system, lined out above and vice versa. Advantageously, the benefits provided by any of the embodiments and examples equally apply to all other embodiments and examples and vice versa.

As used herein "determining" also includes "initiating or causing to determine", "generating" also includes "initiating or causing to generate" and "providing" also includes "initiating or causing to determine, generate, select, send or receive". "Initiating or causing to perform an action" includes any processing signal that triggers a computing device to perform the respective action.

### BRIEF DESCRIPTION OF THE DRAWINGS

In the following, the present disclosure is further described with reference to the enclosed figures:
- Fig. 1: illustrates a workflow of a method for detecting data inconsistency;
- Fig. 2: illustrates an example of a system for detecting data inconsistency.
- Fig. 3: illustrates an example of a system for detecting data inconsistency.

### DETAILED DESCRIPTION OF EMBODIMENT

The following embodiments are mere examples for the method and the system disclosed herein and shall not be considered limiting.

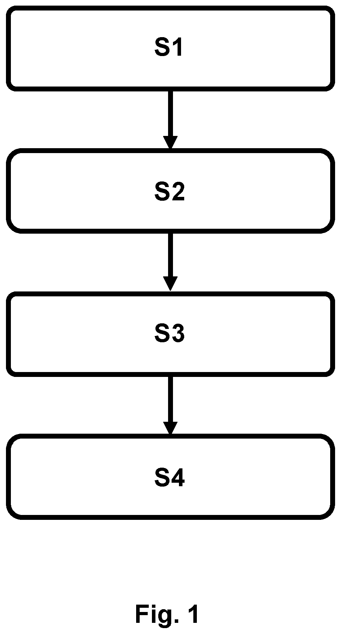

Fig. 1 illustrates a workflow of a method for detecting data inconsistency.

As a first step, connecting S1 a consistency enforcer module 10 with an operation technology, OT, domain knowledge sources and deriving candidates for modelling rules which model the consistency in collected data resulting in aggregated OT domain knowledge and assessed information is performed. This step ensures that we can detect inconsistencies based on general principles such as conservations, etc.

As a second step, combining S2, by using a reporting module 20, the aggregated OT domain knowledge and assessed information from a security information and event management, SIEM, system to build report data is performed. The detection of inconsistencies via data-driven methods is thereby provided. The history created in this step is meant to be inspectable to be reviewed and corrected by experts.

As a third step, applying S3, by using a recommender module 30, the report data to events of the SIEM system and correlating thereon based results with the OT domain knowledge is performed. Similar to the first step, anticipating self-adapting, data-driven detections that feed on historic observation is executed.

As a fourth step, feeding S4 the results to the consistency enforcer module (10) to prepare corresponding consistency rules is performed.

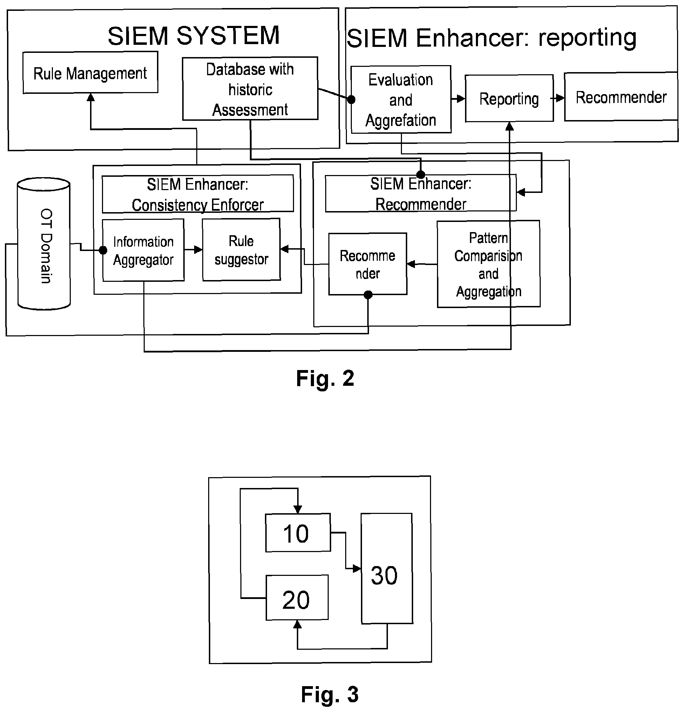

Fig. 2 illustrates an example of a system for detecting data inconsistency and shows an extension of a SIEM with three components: a Consistency Enforcer, a Reporting and a Recommender.

The Consistency Enforcer connects with existing OT domain knowledge sources and derives candidates for rules which model the consistency in collected data. Examples and embodiments for such derivations are the consistency of in-flow, out-flow and tank capacity and level, or the relation of valve position and flow.

The reporting module combines the aggregated OT domain knowledge and assessed information from the SIEM to build a long-term memory of patterns, build reports about observed patterns, noise levels, suggests characteristics of normality / abnormality and indicates temporal and spacious regions of interest that should be further investigated. This component also feeds the recommender that uses the patterns, applies them to near past events and correlates the results with the OT domain knowledge.

This results in candidates for locations where additional sensors should be placed to increase confidence of observations. Furthermore, the results are feed to the Consistency Enforcer to prepare corresponding rules.

The present invention in an exemplary embodiment discloses a system and method for enhancing SIEM systems for OT related security tasks using available domain knowledge to detect inconsistency in collected data streams, obtain insights in normality and abnormality of operational data and to recommend additional collection of data.

Domain knowledge such as plant topology or engineering designs provide vital information about the structural composition and dependencies of the collection of measurements. The system translates and enhances this information to derive rules to monitor the consistency of collected data.

For example, a closed valve and an outflow are inconsistent. Once such information on consistency is available, its long-term evaluation allows the building of pattern databases and statistical description for normality/abnormality, which makes characteristics and insights available even to non-domain experts. Furthermore, for peculiarities in short-term evaluation the system can correlate the structure with them and suggest the placement of additional measurements. This can range from simple human observations, over placement of stand-alone, non-invasive sensors, which provide independent, trust-worthy measurements, up to the dispatchment of autonomous robots monitoring equipment.

Fig. 3 illustrates an example of a system for detecting data inconsistency. A system for detecting data inconsistency, the system comprising a consistency enforcer module 10, a reporting module 20, and a recommender module 30.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A method for detecting data inconsistency, the method comprising:
- Connecting (SI) a consistency enforcer module (10) with an operation technology, OT, domain knowledge sources and deriving candidates for modelling rules which model the consistency in collected data resulting in aggregated OT domain knowledge and assessed information;
- Combining (S2), by using a reporting module (20), the aggregated OT domain knowledge and assessed information from a security information and event management, SIEM, system to build report data;
- Applying (S3), by using a recommender module (30), the report data to events of the SIEM system and correlating thereon based results with the OT domain knowledge; and
- Feeding (S4) the results to the consistency enforcer module (10) to prepare corresponding consistency rules.

2. The method according to claim 1,
wherein the deriving of the candidates for modelling rules is based on derivations of the collected data in terms of inconsistency of data of process variables or measurements, preferably for example variables regarding in-flow, out-flow, or a capacity of a tank.

3. The method according to claim 1 or 2,
wherein the deriving of the candidates for modelling rules is based on derivations of the collected data in terms of inconsistency of data of process variables or measurements, for example variables regarding a filling level of a tank, or a relation of valve position and flow.

4. The method according to one of the claims 1 to 3,
wherein the report data comprises a long-term memory of patterns.

5. The method according to one of the claims 1 to 4,
wherein the report data comprises reports about observed patterns.

6. The method according to one of the claims 1 to 5,
wherein the report data comprises noise levels, suggests characteristics of normality or abnormality and indicates temporal and spacious regions of interest that should be further investigated.

7. The method according to one of the claims 1 to 6,
wherein the report data comprises characteristics of normality or abnormality.

8. The method according to one of the claims 1 to 7,
wherein the report data is used to indicate temporal and spacious regions of interest for further investigation.

9. A system for detecting data inconsistency, the system comprising a consistency enforcer module (10), a reporting module (20), and a recommender module (30), the system configured for executing the method according to claims 1 to 8.

10. A computer program product comprising instructions which, when the program is executed by a computer, cause the computer to carry out the steps of the method according to claims 1 to 8.

11. A computer-readable storage medium comprising instructions which, when executed by a computer, cause the computer to carry out the steps the method according to claims 1 to 8.

12. A data carrier signal carrying the computer program product of claim 10.
